Europäisches Patentamt

European Patent Office

Office européen des brevets

(19)

(11) Veröffentlichungsnummer: **0 035 682**
**B1**

(12) **EUROPÄISCHE PATENTSCHRIFT**

(45) Veröffentlichungstag der Patentschrift:
**28.09.83**

(21) Anmeldenummer: **81101275.6**

(22) Anmeldetag: **23.02.81**

(51) Int. Cl.³: **D 06 B 19/00, D 06 C 7/00**

(54) Verfahren und Vorrichtung zur Wärmebehandlung von imprägnierten Warenbahnen.

(30) Priorität: **06.03.80 CH 1757/80**

(43) Veröffentlichungstag der Anmeldung:
**16.09.81 Patentblatt 81/37**

(45) Bekanntmachung des Hinweises auf die Patenterteilung:
**28.09.83 Patentblatt 83/39**

(84) Benannte Vertragsstaaten:
**AT BE CH DE FR IT LI LU NL SE**

(56) Entgegenhaltungen:
**DE-A-1 945 532**
**DE-A-2 722 851**
**FR-A-2 080 653**
**FR-A-2 105 086**
**FR-A-2 232 501**
**GB-A-1 310 363**
**US-A-3 599 341**
**US-A-3 646 908**

(73) Patentinhaber: **Sinter Limited, 15 Pembroke Road, Bristol BS99 7DX (GB)**

(72) Erfinder: **Der Erfinder hat auf seine Nennung verzichtet**

(74) Vertreter: **Balass, Valentin et ai, Patentanwälte Schaad Balass Sandmeier Alder Dufourstrasse 101, CH-8034 Zürich (CH)**

Verfahren und Vorrichtung zur Wärmebehandlung von imprägnierten Warenbahnen

Die vorliegende Erfindung betrifft ein Verfahren sowie eine Vorrichtung zur Wärmebehandlung von vorzugsweise mit einem härtbaren Kunststoff imprägnierten Warenbahnen gemäß Oberbegriff des Anspruchs 1 bzw. des Anspruchs 6. Verfahren und Vorrichtung eignen sich insbesondere zur Wärmebehandlung von mit einem Duroplast imprägnierten Vliesen und Geweben aus organischen oder anorganischen Fasern, insbesondere Glasfasergeweben.

Eine bekannte Vorrichtung dieser Art, bei der also die vertikal geführte Warenbahn während des Wärmebehandlungsprozesses umgelenkt wird, ist darauf ausgelegt, daß die Wärmebehandlung vor der Umlenkung möglichst weit fortschreitet und somit das Harz entsprechend weitgehend an den Zustand herangeführt wird, in dem es seine klebrigen Eigenschaften verliert. Darüber hinaus wurde die Warenbahn unmittelbar vor der Umlenkung an ihrer den Umlenkwalzen zugekehrten Innenseite mit Kühlluft angeblasen, um das Temperaturgefälle zwischen den Berührungsflächen der Warenbahn und den gekühlten Umlenkwalzen zu vermindern und dadurch zusätzlich dem Ankleben des Harzes an dem Walzenmantel entgegenzuwirken. Das Bestreben nach einer fortgeschrittenen Wärmebehandlung vor der Umlenkung war bei diesen Anlagen für die Bauhöhe maßgebend, wobei ein Kompromiß gefunden werden mußte, bei dem die für die Beendigung der Wärmebehandlung erforderliche Verweilzeit bei einer vernünftigen Warenbahngeschwindigkeit und einer noch vertretbaren Bauhöhe zur Verfügung stand.

Die vorliegende Erfindung geht den diametral entgegengesetzten Weg. In dem Bestreben, bei gleicher Warenbahngeschwindigkeit die Bauhöhe zu verringern oder umgekehrt, bei gleicher Bauhöhe die Warenbahngeschwindigkeit zu steigern, wird der Erfolg — im Lichte des bekannten Konzeptes paradoxerweise — dadurch herbeigeführt, daß erfindungsgemäß vor der Umlenkung die Wärmebehandlung ersterns gar nicht weit vorangetrieben und zweitens durch Abkühlen der Warenbahn in einer Kühlzone sogar noch unterbrochen wird. Im Gegensatz zu dem bekannten Konzept, das die Warenbahn vor der Umlenkung gerade durch die Wärmebehandlung möglichst weitgehend in die Nähe des nichtklebrigen Zustandes des Harzes versetzen wollte, liegt den geschilderten Vorkehrungen die Erkenntnis zugrunde, daß durch Abkühlen der Warenbahn die Klebrigkeit, gleichzeitig aber auch die Polymerisation sozusagen eingefroren wird, indem die Warenbahn während der Umlenkung keine Restwärme mit sich trägt, die ein unkontrolliertes und unkontrollierbares Fortschreiten der Wärmebehandlung bewirken könnte. Die Warenbahn tritt deshalb mit über ihre ganze Breite und Dicke gleichmäßiger Temperaturverteilung in die zweite Wärmebehandlungszone ein, so daß diese ihrerseits für eine genau kontrollierbare Wärmebehandlung ausgenützt werden kann. Auf diese Weise bleibt selbst bei verringerter Bauhöhe bzw. bei erhöhter Bahngeschwindigkeit genügend Zeit, um die Wärmebehandlung nach der Umlenkung wieder in Gang zu bringen und zu vollenden. Dabei hat sich überraschenderweise gezeigt, daß die Wirtschaftlichkeit nicht durch den durch die Abkühlung der Warenbahn bedingten Verlust bzw. Aufwand an Energie beeinträchtigt wird, da die gesteigerte Produktivität und/oder verringerten Baukosten diesbezüglich weit überwiegen. Zudem hat sich auch noch eine Steigerung der Qualität erreichen lassen, da die nur einseitige Abkühlung der Warenbahn durch die Kühlluft, vor allem aber durch die Walze entfällt. Eine solche Vorrichtung verkörpert also nicht mehr einen erzwungenen Kompromiß, vielmehr kann durch Bemessung nicht nur der einen, sondern beider Wärmebehandlungszonen und der Kühlzone, aber auch der Kühlleistung — die sogar auf eine schockartige Kühlwirkung ausgelegt sein kann — unter den jeweils maßgebenden Gesichtspunkten das Optimum erreicht werden.

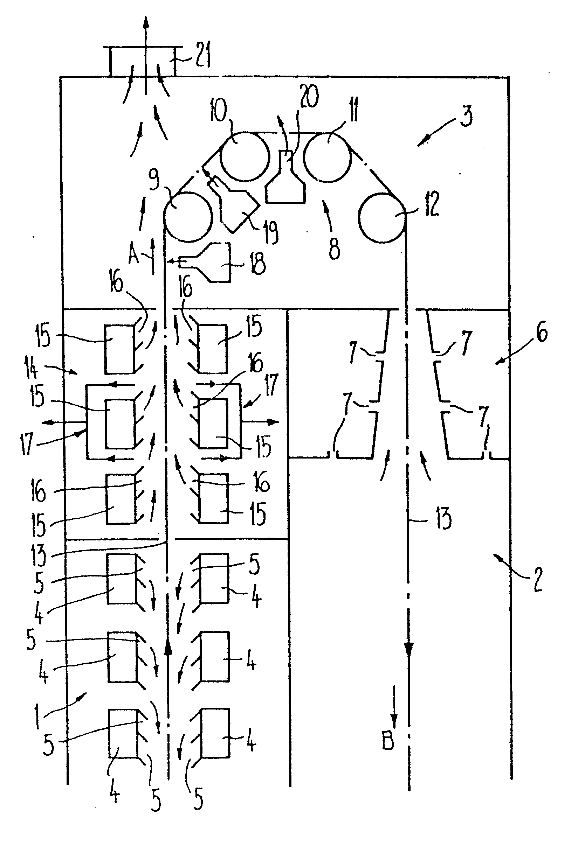

Im folgenden wird anhand der Zeichnung ein Ausführungsbeispiel des Erfindungsgegenstandes näher erläutert. Die einzige Figur zeigt schematisch den oberen Teil einer vertikalen Anlage zur Wärmebehandlung von imprägnierten Warenbahnen.

Die in der Figur gezeigte Anlage weist eine erste vertikale Wärmebehandlungszone 1 auf, von der nur der obere Teil gezeigt ist. Benachbart zu dieser ersten Wärmebehandlungszone 1 ist eine zweite vertikale Wärmebehandlungszone 2 angeordnet, von der ebenfalls nur der obere Teil gezeigt ist. Oberhalb der beiden Wärmebehandlungszonen 1, 2 ist ein Umlenkfeld 3 angeordnet. Der Aufbau der beiden Wärmebehandlungszonen 1, 2 entspricht weitgehend dem Aufbau der beiden Wärmebehandlungszonen bekannter Anlagen und kann demzufolge als bekannt vorausgesetzt werden. Im Oberteil der ersten Wärmebehandlungszone 1 sind übereinander und sich gegenüberliegend Blaskästen 4 angeordnet, welche mit Zuluftdüsen 5 versehen sind, durch die ein nach unten gerichteter Strom eines erwärmten Mediums, z. B. ein Strom von erwärmter Luft, austritt, wie das durch die Pfeile dargestellt ist. Am in der Figur nicht gezeigten unteren Ende der ersten Wärmebehandlungszone ist eine Absaugeinrichtung zum Absaugen des Heizmediums vorgesehen.

Die zweite Wärmebehandlungszone 2 weist in ihrem unteren, in der Figur nicht dargestellten Bereich ebenfalls Blaskästen mit Zuluftdüsen auf, aus denen ein Strom eines warmen Mediums, z. B. ein Strom von warmer Luft, austritt, der nach oben gerichtet ist. Wie die Figur zeigt, ist am oberen Ende der zweiten Wärmebehandlungszone 2 eine nur schematich dargestellte Absaugeinrichtung 6 vorhanden, die mit Einlaßöffnungen 7 versehen ist, durch die die warme Luft hindurchtritt und weggeführt wird.

Im Umlenkfeld 3 ist auf bekannte Weise eine Umlenkwalzenanordnung 8 vorhanden, welche durch vier Umlenkwalzen 9, 10, 11 und 12 gebildet wird.

Die mit 13 bezeichnete Warenbahn, welche auf an sich bekannte Weise mit einem Imprägniermittel imprägniert worden ist, durchläuft in Aufwärtsrichtung, d. h. in Richtung des Pfeils A, zuerst die erste Wärmebehandlungszone 1, wobei sie zwischen den sich gegenüberliegenden Blaskästen 4 geführt ist. Die über die Umlenkwalzen 9—12 laufende Warenbahn 13 wird umgelenkt und durchläuft anschließend in Abwärtsrichtung, d. h. in Richtung des Pfeils B, die zweite Wärmebehandlungszone 2. Zwischen dieser zweiten Wärmebehandlungszone 2 und der Aufwicklung wird die Warenbahn 13 auf bekannte Weise bekühlt.

Die Gesamtlänge der ersten Wärmebehandlungszone und der Kühlzone ist etwa gleich der Länge der zweiten Wärmebehandlungszone. In dieser Kühlzone 14 sind Blaskästen 15 vorgesehen, die in Bewegungsrichtung A der Warenbahn 13 übereinander und bezüglich dieser Warenbahn 13 gegenüberliegend angeordnet sind. Wie schematisch dargestellt, sind diese Blaskästen 15 mit Auslaßdüsen 16 versehen, durch die ein gegen die Warenbahn 13 gerichteter Strom eines Kühlmediums, z. B. Luft, austritt, wie das durch die Pfeile dargestellt ist. Im weiteren ist in der Kühlzone 14 eine Absaugeinrichtung 17 angeordnet, welche nur schematisch dargestellt ist und das Kühlmedium aus der Kühlzone 14 wegführt.

Im Umlenkfeld 3 sind weiter drei Blasdüsen 18, 19 und 20 angeordnet, welche die Warenbahn 13 auf ihrer auf den Umlenkwalzen 9—12 zur Auflage kommenden Seite mit einem Kühlmedium, z. B. Luft, beblasen. Die Blasdüse 18 ist dabei in Bewegungsrichtung A der Warenbahn 13 gesehen vor der ersten Umlenkwalze 9 angeordnet, während die beiden übrigen Blasdüsen 19 und 20 zwischen dem ersten Umlenkwalzenpaar 9, 10 bzw. dem zweiten Umlenkwalzenpaar 10, 11 angeordnet sind. Über einen Abzug 21 wird das Kühlmedium aus dem Umlenkfeld 3 abgezogen.

Die Wirkungsweise der beschriebenen Anlage ist wie folgt: Nach Durchlaufen einer Imprägniereinrichtung wird die imprägnierte Warenbahn 13 in vertikaler Richtung nach oben durch die erste Wärmebehandlungszone 1 bewegt. Dabei wird die Warenbahn 13 durch das im Gegenstrom störmende warme Medium auf beiden Seiten beaufschlagt. In dieser ersten Wärmebehandlungszone 1 erfolgt somit zuerst ein langsames Aufheizen der Warenbahn 13 sowie ein Verdampfen des Lösungsmittels und eine chemische Reaktion (Vorpolymerisation, -polyaddition, -polykondensation). Die aus der ersten Wärmebehandlungszone 1 austretende Warenbahn 13, die noch klebrig ist, läuft nun zwischen den Blaskästen 15 der Kühlzone 14 hindurch.

Durch das die Warenbahn 13 auf beiden Seiten beaufschlagende Medium wird nun die Warenbahn 13 abgekühlt, wobei die chemische Reaktion einerseits und die Klebrigkeit andererseits eingefroren wird. Um nun zu vermeiden, daß Kühlluft von der Kühlzone 14 in die darunter liegende erste Wärmebehandlungszone 1 gelangen kann, wird durch die Absaugeinrichtung 17 eine größere Kühlmediummenge abgesaugt als über die Blaskästen 15 zugeführt wird. Der Druck in der Kühlzone 14 ist somit geringer als der in der ersten Wärmebehandlungszone 1 herrschende Druck.

Die drei Blasdüsen 18, 19 und 20 im Umlenkfeld 3 beaufschlagen, wie bereits erwähnt, die Warenbahn 13 auf ihrer einen Seite mit Kühlluft, ohne dadurch eine nennenswerte einseitige Kühlung der Warenbahn zu bewirken, da diese in der Kühlzone bereits abgekühlt wurde. Diese Blasdüsen 18, 19 und 20, die übrigens nicht zwingend erforderlich sind, bewirken vielmehr eine Belüftung des von der Warenbahn umschlossenen Raumes.

Nach Umlenkung der Warenbahn 13 im Umlenkfeld 3 wird die Warenbahn 13 in Richtung des Pfeils B durch die zweite Wärmebehandlungszone 2 geführt, in der die bereits in der ersten Wärmebehandlungszone 1 eingeleitete chemische Reaktion ihren Fortgang nimmt (Nachpolymerisation, -polyaddition, -polykondensation). Da die Warenbahn in dem bestimmten bzw. bestimmbaren Zustand in die zweite Wärmebehandlungszone eintritt, indem sie die erste verlassen hat, kann die Wärmebehandlung optimal gesteuert werden. Vor dem Aufwickeln der Warenbahn wird diese, wie bereits erwähnt, gekühlt, um das oft noch leicht klebende Imprägniermittel rasch auf Raumtemperatur zu bringen und den chemischen Vorgang zu stoppen und dadurch die Haltbarkeit der imprägnierten Warenbahn zu gewährleisten.

Die beschriebene Anlage eignet sich vor allem zur Wärmebehandlung von Geweben und Vliesen aus organischen und anorganischen Fasern. Insbesondere lassen sich mit dieser Anlage imprägnierte Glasfasergewebe verarbeiten.

Als Imprägniermittel werden insbesondere härtbare Kunststoffe (Duroplaste) verwendet, z. B. Melamin-, Phenol-, Polyester-, Epoxy- und Silikonharze.

Die imprägnierten und in der beschriebenen Anlage wärmebehandelten Warenbahnen werden vorzugsweise zu Schichtstoffen weiterverarbeitet, wie sie u. a. in der Elektro- und Elektronikindustrie Verwendung finden, z. B. für gedruckte Schaltungen.

**Patentansprüche**

1. Verfahren zur Wärmebehandlung von vorzugsweise mit einem härtbaren Kunstharz imprägnierten Warenbahnen, bei dem die imprägnierte Warenbahn in Aufwärtsrichtung durch eine erste Wärmebehandlungszone, anschließend um eine Umlenkwalzenanordnung und dann in Abwärtsrichtung durch eine zweite Wärmebehandlungszone geführt wird, dadurch gekennzeichnet, daß die Warenbahn (13) nach Verlassen der ersten Wärmebehandlungszone (1) und vor dem Durchlaufen der Umlenkwalzenanordnung (8) in einer Kühlzone (14) abgekühlt wird.

2. Verfahren nach Anspruch 1, dadurch gekennzeichnet, daß die Warenbahn (13) in der Kühlzone (14) beidseitig mit einem Kühlmedium, z. B. Luft, beaufschlagt wird.

3. Verfahren nach Anspruch 1, dadurch gekennzeichnet, daß als Warenbahn mit einem Duroplast imprägnierte Vliese und Gewebe aus organischen oder anorganischen Fasern, insbesondere Glasfasergeweben, verwendet werden.

4. Vorrichtung zur Wärmebehandlung von vorzugsweise mit einem härtbaren Kunstharz imprägnierten Warenbahnen (13), mit einer ersten, von unten nach oben durchlaufenen Wärmebehandlungszone (1), einer Umlenkwalzenanordnung (8) zum Umlenken der Warenbahn (13) sowie einer dieser nachgeschalteten, zweiten, von oben nach unten durchlaufenen Wärmebehandlungszone (2), dadurch gekennzeichnet, daß nach der ersten Wärmebehandlungszone (1) und vor der Umlenkwalzenanordnung (8) eine Kühlzone (14) angeordnet ist.

5. Vorrichtung nach Anspruch 4, dadurch gekennzeichnet, daß die Warenbahn (13) in der Kühlzone (14) beidseitig mit einem Kühlmedium, z. B. Luft, beaufschlagbar ist.

6. Vorrichtung nach Anspruch 5, dadurch gekennzeichnet, daß in der Kühlzone (14) auf beiden Seiten der Bewegungsbahn der Warenbahn (13) und in Bewegungsrichtung (A) der Warenbahn (13) hintereinander angeordnete Auslaßdüsen (16) für das Kühlmedium vorhanden sind.

7. Vorrichtung nach Anspruch 5 oder 6, dadurch gekennzeichnet, daß in der Kühlzone (14) eine Absaugeinrichtung (17) für das Kühlmedium angeordnet ist.

8. Vorrichtung nach einem der Ansprüche 4–7, dadurch gekennzeichnet, daß der Druck in der Kühlzone (14) geringer ist als der in der ersten Wärmebehandlungszone (1) herrschende Druck.

9. Vorrichtung nach einem der Ansprüche 4 bis 8, dadurch gekennzeichnet, daß die erste Wärmebehandlungszone (1) etwa um die Länge der Kühlzone (14) kürzer ist als die zweite Wärmebehandlungszone (2).

10. Verwendung der Vorrichtung nach einem der Ansprüche 4–9 zur Wärmebehandlung von mit einem Duroplast imprägnierten Vliesen und Geweben aus organischen oder anorganischen Fasern, insbesondere Glasfasergeweben.

## Claims

1. A method of heat treating material webs, especially material webs impregnated with a thermosetting resin, wherein the impregnated material web is guided in an upward direction through a first heat treatment zone, thereafter about a deflection roll arrangement, and then is guided in a downward direction through a second heat treatment zone, characterised by cooling the material web (13), after departing from the first heat treatment zone (1) and before passage through the deflection roll arrangement (8), in a cooling zone.

2. A method as claimed in claim 1, characterised by applying to both faces of the material web (13) in said cooling zone a cooling medium, e. g. air.

3. A method as claimed in claim 1, characterised by selecting as the material web a non-wowen or a fabric formed of organic or inorganic fibres, in particular of glass fibers, and impregnated with a duroplast.

4. Apparatus for heat treating material webs, especially material webs (13) impregnated with a thermosetting resin, comprising a first heat treatment zone (1) extending from a lower region towards an upper region, a deflection roll arrangement (8) for deflecting the material web (13), a second heat treatment zone (2) arranged following said deflection roll arrangement and extending from a top region towards a bottom thereof, characterised by a cooling zone (14) arranged after said first heat treatment zone (1) and before said deflection roll arrangement (8).

5. Apparatus as claimed in claim 4, characterised by means for applying a cooling medium to both faces of said material web (13), e.g. air, in said cooling zone (14).

6. Apparatus as claimed in claim 5, characterised by outlet nozzles (16) for the cooling medium arranged within the cooling zone (14) on both sides of the path of movement of the material web (13) and behind one another with respect to the direction of movement (A) of the material web (13).

7. Apparatus as claimed in claim 5 or 6, characterised by a suction device (17) for the cooling medium arranged in said cooling zone (14).

8. Apparatus as claimed in any of claims 4 to 7, characterised by the pressure in the cooling zone (14) being lower than the pressure prevailing in the first heat treatment zone (1).

9. Apparatus as claimed in any of claims 4 to 8, characterised by said first heat treatment zone (1) being shorter than said second heat treatment zone (2) by about a dimension equal to the length of said cooling zone (14).

10. Use of the apparatus as claimed in any of claims 4 to 9 for heat treatment of non-wovens and fabrics formed of organic or inorganic fibers, especially of glass fibers and impregnated with a duroplast.

## Revendications

1. Procédé pour le traitement à chaud de laizes imprégnées de préférence avec une résine durcissable, où la laize imprégnée est guidée vers le haut à travers une première zone de traitement à chaud, puis sur un dispositif à rouleaux de changement de direction puis vers le bas à travers une deuxième zone de traitement à chaud, caractérisé en ce que la laize (13), après avoir quitté la première zone de traitement à chaud (1) et avant de traverser le dispositif (8) à rouleaux de changement de direction est refroidie dans une zone de refroidissement (14).

2. Procédé selon la revendication 1, caractérisé en ce que la laize (13), dans la zone de refroidissement (14), est influencée des deux côtés par un fluide de refroidissement par exemple de l'air.

3. Procédé selon la revendication 1, caractérisé en ce que comme laize, on utilise un voile et un tissu de fibres organiques ou inorganiques, en particulier des tissus de fibres de verre, imprégnés de plastique thermodurcissable.

4. Dispositif pour traitement à chaud de laizes (13) imprégnées d'une résine durcissable, comportant une première zone de traitement à chaud (1) parcourue d'en bas vers le haut, un dispositif (8) à rouleaux de changement de direction pour changer la direction de la laize (13), ainsi qu'une deuxième zone de traitement à chaud (2), en aval de ce dispositif et parcourue d'en haut vers le bas, caractérisé en ce qu'après la première zone de traitement à chaud (1) et avant le dispositif (8) à rouleaux de changement de direction est disposée une zone de refroidissement (14).

5. Dispositif selon la revendication 4, caractérisé en ce que la laize (13) peut, dans la zone de refroidissement (14), être ifluencée des deux côtés par un fluide de refroidissement par exemple de l'air.

6. Dispositif selon la revendication 5, caractérisé en ce que dans la zone de refroidissement (14) il existe des buses de sortie (16) pour le fluide de refroidissement, disposées des deux côtés du trajet de la laize (13) et l'une derrière l'autre dans le sens du mouvement (A) de la laize (13).

7. Dispositif selon la revendication 5 ou la revendication 6, caractérisé en ce que dans la zone de refroidissement (14) est disposé un dispositif d'aspiration (17) pour le fluide de refroidissement.

8. Dispositif selon l'une des revendications 3—7, caractérisé en ce que la pression dans la zone de refroidissement (14) est plus faible que la pression qui règne dans la première zone de traitement à chaud (1).

9. Dispositif selon l'une quelconque des revendications 4 à 8, caractérisé en ce que la première zone de traitement à chaud (1) est plus courte, à peu près de la longueur de la zone de refroidissement (14), que la deuxième zone de traitement à chaud (2).

10. Utilisation du dispositif selon l'une quelconque des revendications 4—9 pour le traitement à chaud de voiles, de tissus en fibres organiques ou inorganiques, en particulier de tissus en fibres de verre imprégnées d'un plastique thermodurcissable.